**Europäisches Patentamt**

**European Patent Office**

**Office européen des brevets**

(19)

(11) Veröffentlichungsnummer: **0 175 881**
**B2**

(12) **NEUE EUROPÄISCHE PATENTSCHRIFT**

(45) Veröffentlichungstag der neuen Patentschrift:
**19.12.90**

(51) Int. Cl.⁵: **A 61 C 17/02,** A 61 H 13/00,
B 05 B 1/16

(21) Anmeldenummer: **85109632.1**

(22) Anmeldetag: **31.07.85**

(54) Spritzdüse für eine Munddusche mit Einfach- bzw. Mehrfachstrahl.

(30) Priorität: **13.08.84 DE 8423982 u**
**13.08.84 DE 3429737**

(43) Veröffentlichungstag der Anmeldung:
**02.04.86 Patentblatt 86/14**

(45) Bekanntmachung des Hinweises auf die
Patenterteilung:
**20.04.88 Patenblatt 88/16**

(45) Bekanntmachung des Hinweises auf die
Entscheidung über den Einspruch:
**19.12.90 Patentblatt 90/51**

(84) Benannte Vertragsstaaten:
**AT CH DE FR GB LI NL SE**

(56) Entgegenhaltungen:
**DE-A-2 930 132**
**DE-A-3 006 660**
**DE-A-3 044 025**
**DE-A-3 047 336**
**DE-A-3 101 941**
**DE-C-2 200 083**

(73) Patentinhaber: **Braun Aktiengesellschaft**
**Rüsselsheimer Strasse 22**
**D-6000 Frankfurt/Main (DE)**

(72) Erfinder: **Kirchner, Horst**
**Neugasse 17**
**D-6236 Eschborn (DE)**

(74) Vertreter: **Einsele, Rolf**
**Braun Aktiengesellschaft Postfach 1120**
**Frankfurter Strasse 145**
**D-6242 Kronberg Taunus (DE)**

EP 0175881 B2

Courier Press, Leamington Spa, England.

**Beschreibung**

Die Erfindung betrifft eine am Handstück einer Munddusche angebrachte Spritzdüse nach der Gattung des Hauptanspruchs.

Bereits aus der DE—A—31 01 941 ist eine solche Spritzdüse bekannt, bei der der Spritzdüsenkopf des Mundstücks eine Spritzdüsenplatte aufweist, in welche mittels Bohrungen ein Kranz von Spritzdüsen zur Abgabe eines Mehrfachstrahls sowie ausserhalb dieses Kranzes ein einzelne Einzelstrahlspritzdüse vorgesehen sind. Im Mundstück ist ein axial beweglicher Schieber angeordnet, an dessen kopfseitigem Ende eine Schaltplatte befestigt ist, welche durch eine Feder dichtend gegen die Spritzendüsenplatte gepresst wird. Die Schlatplatte weist eine Durchgangsbohrung auf, die so gestaltet und bemessen ist, dass in der einen Grundstellung die Mehrstrahlspritzdüsen frei und die Einzelstrahlspritzdüse abgedeckt sind, während in der anderen Grundstellung die Mehrstrahlspritzdüsen abgedeckt und die Einzelstrahlspritzdüse frei sind. Die Schaltplatte wird mittels eines am Griffteil des Handstücks der Munddusche befestigten Schiebeschalters über einen Kolben und einen Stössel betätigt.

Insgesamt ist der dort beschriebene Umschaltemechanismus recht kompliziert aufgebaut und voluminös, was durch die geometrische Anordnung der Spritzendüsen noch verstärkt wird, so dass ein bedienungsgerechter, schlanker Aufbau der Spritzdüse praktisch nicht realisierbar und eine kostengünstige Grosserienfertigung nicht gegeben ist. Die grosse Anzahl der eingesetzen, beweglichen Teile zum Umschalten der Düse von Einfach- auf Mehrfachstrahl lässt darüber hinaus eine befriedigende Funktionssicherheit im praktischen Gebrauch nicht erwarten. Eine Lösung des Problems der Reinigung der Spritzendüsen von Verschmutzung bzw. Verkalkung wird überhaupt nicht angesprochen.

Aus der DE—A1 30 47 336 ist ein Brausekopf für Bade- und Duschanlagen des Sanitärsektors bekannt, der einen Einzelstrahl und/oder einen Mehrfachstrahl abgeben kann. Hierzu ist eine mit einem Brauseboden verbundener Kolben zwischen zwei Extremallagen kontinuierlich verschiebbar, wobei in der ersten extremalen Lage nur Austrittsöffnungen für einen Mehrfachstrahl und in der zweiten extremalen Lage nur eine Austrittsöffnung für einen Einfachstrahl freigegeben werden. Der Austritt für den Einfachstrahl liegt dabei innerhalb des Strahlquerschnitts für den Mehrfachstrahl. Als Verstellmechanismus für den Kolben dient ein Bewegungsgewinde an einer stromabwärts gelegenen Verlängerung des Kolbens, mit dem der Kolben in jeder Position zwischen den beiden Extremallagen fixierbar ist. Diese Konstruktion eines Brausekopfes läßt sich aufgrund des komplizierten Aufbaus nicht ohne weiteres auf die wesentlich kleiner dimensionierten Spritzdüsen für Mundduschen übertragen. Darüber hinaus ist eine kontinuierliche Umschaltung zwischen einem Einfach- und Mehrfachstrahl jedenfalls bei Spritzdüsen für Mundduschen nicht zweckmäßig bzw. für den Benutzer nur schwer zu handhaben.

Auch die DE—A—30 44 025 offenbart eine sogenannte Kombinationsdüse zur Abgabe eines Einzel- oder Mehrfachstrahls. Der Haltegriff des Handstücks ist mit zwei parallellaufenden, in einem längsverscheibbaren Einsatz angeordneten Flüssigketiskanälen versehen, von denen jeweils einer mittels eines Schiebeschalters in Verbindung mit dem Flüssigkeitseinlass gebracht werden kann. Das auf den Haltgriff aufsteckbare Zuführstück weist an seinem oberen Ende zwei verschiedenartige Spritzdüsen und zwei parallel laufende, mit den im Haltegriff befindlichen Flüssigkeitskanälen in Verbindung bringbare Kanäle auf, wobei der eine Kanal in einer einstrahligen und der andere Kanal in einer mehrstrahligen Spritzdüse endet.

Auch die Kombinationsdüse gemäss der DE—A—3 044 025 besitzt verschiedene Nachteile. Zum einen ergbit sich aufgrund der beiden längs nebeneinander liegenden Flüssigkeitskanäle zusätzlich zu dem damit verbundenen grösseren Fertigungsaufwand auch eine dickes und damit unhandlichers Zuführstück. Zum anderen entsteht zusätzlicher Dichtungsaufwand und insgesamt gesehen eine merkliche Erhöhung der Herstellungkosten. Darüberhinaus erfordern die am oberen Ende des Zuführstücks nebeneinander angebrachten beiden Spritzdüsen einen relativ grossflächigen Düsenkopf, wodurch eine gezielte Strahlführung erschwert wird.

Die aus der DE—C—20 50 687 bekannte Spritzdüse weist in ihrem Düsenkopf Austrittsöffnungen auf, die einen Durchmesser im Bereich von etwa 0,1 mm bis 0,5 m haben, was dazu führt, dass diese leicht durch Veruneinigungen oder Kalkablagerungen verstopft werden können. Solche Verunreinigungen lassen sich meistens nur mühsam entfernen, beispielsweise durch Pressluft oder mittels einer entsprechend dünnen Nadel.

Zur Erleichterung der Reinigung der Austrittsöffnungen im Düsenkopf wurde gemäss der DE—C—2 200 083 ein, in einer Durchbrechung des Düsenkopfes axial bewegliches Einsatzstück vorgesehen, welches sich beim Betrieb der Spritzdüse in der sogenannten Spritzstellung durch den im Düsenkopf herrschenden Flüssigkeitsdruck dichtend an die Einfassung der Durchbrechung anlegt und Flüssigkeit nur aus einigen, in der Einfassung eingelassenen Nuten austreten lässt. Ist die Spritzdüse ausser Betrieb, kann das Einsatzstück leicht in die sogenannte Innenstellung gebracht werden, in der die in die Einfassung der Durchbrechung eingelassenen Nuten freigelegt werden können und daher leichter zu reinigen sind.

Eine Weiterentwicklung der vorhergehend geschilderten Spritzdüse ist in der DE—A—29 30 132 offenbart. Die Anordnung ist so dimensioniert, dass ein, in einem kreisringförmigen Einsatz verschiebbar gelagertes Verschlussstück in eine Reinigungsstellung bringbar ist, so das Nuten, die in der Spritzstellung des Verschlussstücks die Düsenöffnungen definieren, zum Zwecke der Reinigung durch Ausspülen oder gegebenenfalls Bürsten, jedenfalls mit zusätzlichen Hilfsmitteln, gut zugänglich sind.

Ein Nachteil dieser bekannten Spritzdüse besteht darin, dass — zumindest bei festsitzendem Schmutz oder bei Kalkablagerungen — trotzdem noch jede einzelne Nut gesondert manuell mit einem geeigneten Gegenstand zu reinigen ist.

Der Erfindung liegt daher die Aufgabe zugrunde, eine Spritzdüse der eingangs geschilderten Art derart weiterzubilden, daß die Spritzdüse insbesondere eine schlanke Bauform und geringen Dichtungsaufwand aufweist, in Großserienfertigung wirtschaftlich herstellbar ist und während des praktischen Gebrauchs hohe Zuverlässigkeit zeigt.

Diese Aufgabenstellung wird durch eine Spritzdüse mit den Merkmalen des Hauptanspruchs gelöst. Vorteilhafte Ausgestaltungen zur zuverlässigen Reiningung der Düsenöffnungen ohne Verwendung zusätzlicher Hilfsmittel sind in den Unteransprüche beschrieben.

Die Erfindung wird anhand der in den Figuren 1—5 dargestellten Ausführungsbeispiele im folgenden näher erläutert. Es zeigen:

Fig. 1 eine schematische Darstellung des Handstücke einer Mundusche,

Fig. 2 einen Längsschnitt durch einen Düsenkopf, wobei sich das Kernstück im rechten Teil der Figur in seiner ersten Extremallage befindet und vom Düsenkopf ein Mehrfachstrahl abgegeben wird, während im linken Teil dieser Figur sich das Kernstück in seiner zweiten Extremallage befindet, in der vom Düsenkopf nur ein Einfachstrahl abgegeben wird,

Fig. 3 eine Schnitt entlang der Linie III—III der Fig. 2 wobei im linken Teil dieser Figur das Kernstück und die Schraubenfeder um 30° gegen die Pfeilrichtung A um ihre gemeinsame Achse gedreht dargestellt werden,

Fig. 4 eine Draufsicht auf den Düsenkopf der Fig. 2,

Fig. 5 eine schematische Darstellung der Vorrichtung, die bewirkt, dass das Kernstück nach jedem Niederdrücken von der einen der beiden Extremlagen in die andere übergeht.

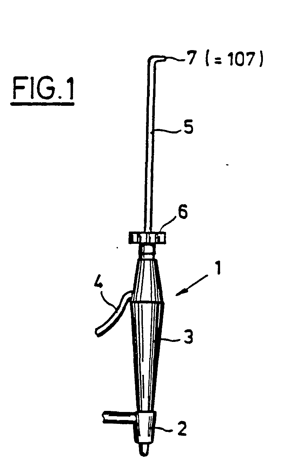

Fig. 1 zeigt eine Handstück 1 einer hier nicht dargestellten, durch eine elektrische Pumpe oder auch nur mittels des Wasserdrucks des Leitungsnetzes betriebenen Mundusche, welches in eine an der Mundusche befestigte Halterung 2 eingesteck ist. Das Handstück 1 besteht im wesentlichen aus einem Haltegriff 3, in den eine an der Mundusche ausgehende Flüssigkeitszuleitung 4 einmündet und aus einem in den Haltegriff 3 auswechselbar eingesteckten Zufuhrstück 5, welches mittels einer Rändelmutter 6 dichtend mit dem Haltegriff 3 verbunden ist. Vom Antriebsteil der Mundusche strömt plusierend oder auch kontinuierlich Flüssigkeit in den Haltegriff 3 und von dort in das Zufuhrstück 5, welches an seinem freien Ende eine Spritzdüse mit einem Düsenkopf 7 aufweist, aus dem ein Mehrfachstrahl oder wahlweise ein ein- oder Mehrfachstrahl oder wahlweise ein Ein- oder Mehrfachstrahl austritt.

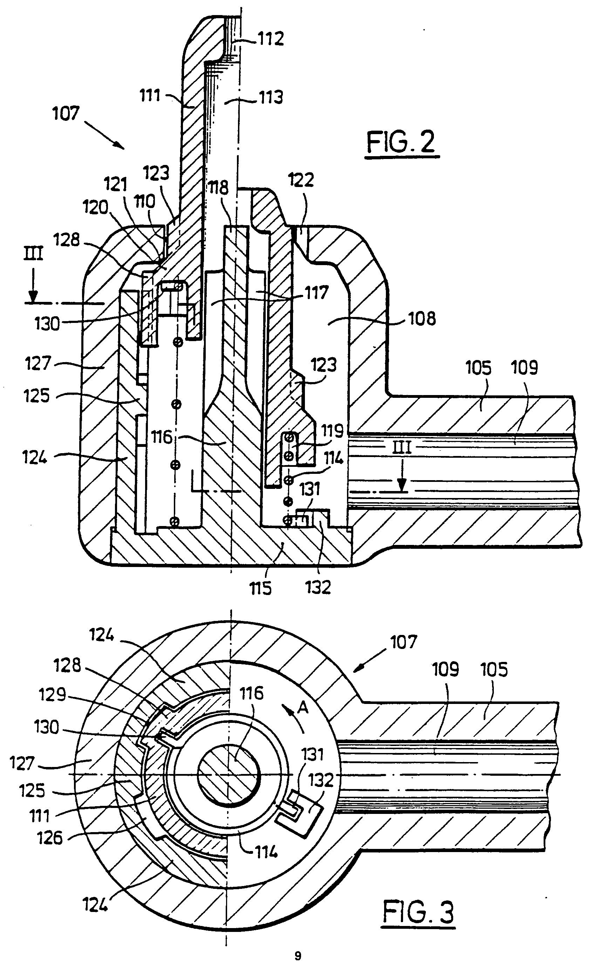

Gemäss den Fig. 2, 3 und 4 besteht der Düsenkopf 107 im wesentlichen aus einer zylinderförmigen Flüssigkeitskammer 108, die von einer durch das Zuführstück 105 verlaufenden Zuleitung 109 gespeist wird, und einem, in einer aus der Oberseite der Flüssigkeitskammer 108 ausgeformten Durchbrehung 110 vertikal verschiebbaren Kernstück 111. Die aus einer kreisringförmigen Seitenwand 127 gebildete Flüssigkeitskammer 108 wird an ihrer Unterseite begrenzt durch ein Einsatzstück 115, dem eine ins innere der Flüssigkeitskammer 108 ragendes zylinderförmiges Zentrierstück 116 angeformt ist, das zwei rechteckförmige Nuten 117 aufweist und sich oberhalb der beiden Nuten 117 in einen Zylinder 118 mit kleinerem Durchmesser verjüngt. Das Kerstück 111 weist eine in eine Auslassöffnung 112 mündende Seele 113 auf, in die das Zentrierstück 116 eingreift, wodurch das Kenrstück 111 bei einer vertikalen Bewegung eine Führung erhält.

Durch eine Schraubenfeder 114, die einerseits gegen das Einsatzstück 115 und andererseits in einer ringförmigen Nut 119 von unten gegen das Kerstück 11 anliegt, steht letzteres unter einer Vorspannung, die dazu ausreicht eine dem Kernstück 11 angeformte Schräge 120 so fest gegen eine gerundet Unterkante 121 der Begrenzung der Durchbrechung 110 anzudrücken, dass zwischen der Begrenzung der Durchbrechung 110 und der Kontur des Kernstücks 111 kein Wasser hindurchtreten kann.

Gemäss der Figur 2 links, bei der das Kernstück 111 sich in seiner oberen Lage befindet, kann aufgrund der vorstehend erwähnten Abdichtung zwischen Durchbrechung 110 und Kernstück 111 nur Flüssigkeit aus der Auslauföffnung 112 austreten, d.h. der Düsenkopf 107 gibt einen Einfachstrahl ab. Dabei strömt die über die Zuleitung 109 eintretende Flüssigkeit um das Zentrierstück 116 herum und steigt in den beiden rechteckförmigen Nuten 117 nach oben in die Seele 113 und schliesslich zur Auslassöffnung 112.

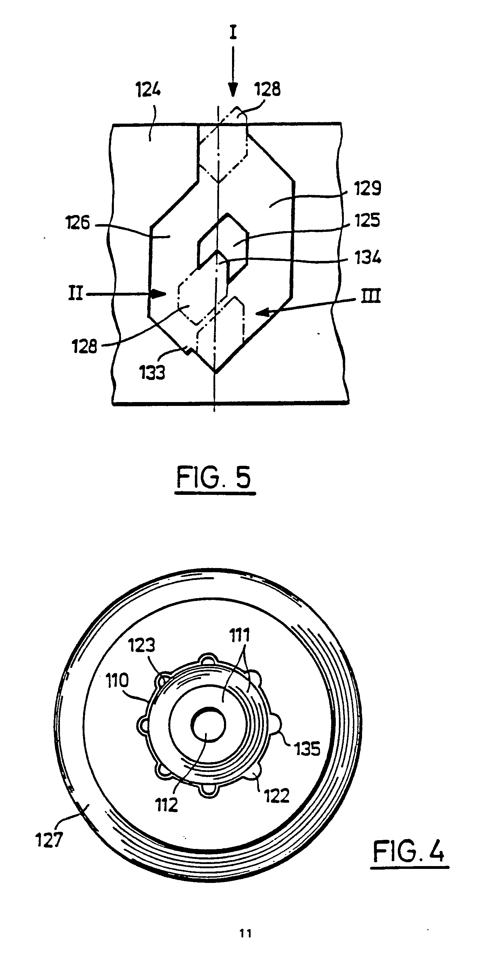

Drückt man nun das Kernstück 111 gegen die von der Schraubenfeder 114 ausgebüete Kraft nach unten, so rastet es in der in der Fig. 2 rechts gezeigten Lage ein. Die diese Einrastung bewerkstelligende Vorrichtung wird weiter unten im Zusammenhang mit der Erläuterung der Fig. 5 näher beschrieben werden. Beim Niederdrücken des Kernstücks 111 dringt das zylinderförmige obere Ende 118 in die Auslassöffnung 112 ein und befreit diese dabei gegebenenfalls von Schmutz- oder Kalkablagerungen.

In der unteren Lage des Kernstücks 111 dichtet der untere Teil des Zentrierstücks 116 die Seele 113 des Kernstücks 111 und damit die Auslassöffnung 112 gegenüber der Flüssigkeitskammer 108 ab. Gleichzeitig werden aber sechs halbkreisförmige Austrittsöffnungen 122 freigegbenen, die durch die Kontur des Kernstücks 111 und durch sechs in die Begrenzung der Durchbrechung 110 eingelasse Ausnehmungen 135 gebildet werden (Fig. 4) und die in der oberen Lage des Kernstücks 111 zum einen durch die Schräge 120 und die abgerundete Unterkante 121 der Begrenzung der Druchbrechung 110 abgedichtet und zum anderen durch dem Kernstück 111 angeformte halbzylinderförmige Nasen 123 weitgehend verschlossen waren. Die Flüssigkeit strömt als bei einer Lage des Kernstückes 11 gemäss der Fig. 2 rechts von der Flübssigkeitskammer 108 nur noch aus den sechs Austrittsöffnungen 112 aus. Der Düsenkopf 107 arbeitet dann als Mehrstrahldüse.

Bei jedem Übergang von der unteren in die obere Lage des Kernstücks 111 werden die Austrittsöffnungen 122 durch die in sie eingreifenden Nasen 123 von enventuellen Verschmutzungen oder Kalkablagerungen gereinigt.

Aus den Fig. 2 und 4 einerseits und Fig. 5 andererseits ist erkenntlich, dass die Arreitierung des beweglichen Kernstücks 111 in seiner oberen und unteren Lage durch eine sogenannte Herzkurvensteuerung erfolgt. Dem Einsatztstück 115 ist ein Steg 124 angeformt, aus dem zwei Ausnehmungen 126 und 129 derart herausgeschnitten sind, dass zwischen denselben eine Nase 125 bestehen bleibt. Das Kernstück 111 weist einerseits einen Vorsprung 128 und andererseits einen Einschnitt auf, in dem das obere abgebogene Ende 130 der Schraubenfeder 114 eingreift. Das untere abgebogene Ende 131 der Schraubenfeder 114 ist ein einer dem Einsatzstück 115 angeformten Nase 132 gelagert.

Fig. 3 zeigt das Kernstück 111 in seiner oberen Lage, in der der Vorsprung 128 über der Nase 125 liegt. In dieser Lage wird die Schräge 120 des Kernstücks 111 durch eine Vorspannung der Schraubenfeder 114 fest gegen die abgerundete Unterkante 121 der Einfassung der Durchbrechung 110 gedrückt. Wird das Kernstück 111 niedergedrückt, wird dessen Vorsprung 128 in der Ausnehmung 126 geführt und zwar so weit, bis die untere Spitze des Vorsprungs 128 gegen einen Vorsprung 133 der Ausnehmung 126 stösst. Wird nun das Kernstück 111 wieder losgelassen, so rastet die obere Spitze des Vorsprungs 128 in einen entsprechenden Einschnitt 134 der Nase 125 ein, wodurch das Kernstück 111 in seiner unteren Lage arretiert wird.

Gegenüber der in Fig. 5 mit 1 bezeichneten Lage hat sich in der mit II bezeichneten Lage das Kernstück 111 merklich um seine eigene Achse in Richtung des in Fig. 3 mit A bezeichneten Pfeiles gedreht. Dadurch übt die Schraubenfeder eine gegen die Pfeilrichtung A wirkende Torsionsspannung aus, die dafür sorgt, dass nach erneutem Niederdrücken der Vorsprung 128 die mit III bezeichnete Lage einnimmt und schliesslich nach Loslassen der Kernstücks 111 der Vorsprung 128 wieder in die mit I bezeichnete Lage zurückkehrt.

## Patentansprüche

1. Am Handstück einer Munddusche angebrachte Spritzdüse mit einem Düsenkopf (107), aus dem zur Mund- und Zahnpflege wahlweise ein Einzel- oder Mehrfachstrahl abgegeben werden kann, mit einem zwischen zwei Extremallagen verschiebbaren Kernstück (111), welches in seiner ersten extremalen Lage nur Austrittsöffnungen (122) für einen Mehrfachstrahl und in seiner zweiten extremalen Lage nur eine Austrittsöffnung (112) für einen Einfachstrahl freigibt, wobei bei einer Verschiebung des Kernstücks (111) die über eine Zufuhrstück (105) zum Düsenkopf (107) verlaufende Flüssigkeitsbahn unverändert bleibt, dadurch gekennzeichnet, daß das Kernstück (111) in einer Durchbrehung (110) des Düsenkopfes (107) angeordnet ist, der Austritt für den Einfachstrahl innerhalb des Strahlquerschnittes für den Mehrfachstrahl vorgesehen ist, und daß im Düsenkopf (107) eine Rastvorrichtung (114, 125, 128) vorgesehen ist, über welche das Kernstück (111) von der einen in die andere Extremallage verstellbart ist.

2. Spritzdüse nach Anspruch 1, dadurch gekennzeichnet, dass das Kernstück (111) einerseits durch die von einer Feder (114) ausgeübte mechanische Spannung selbsttätig in einer der beiden Extremallagen arretiert wird und andererseits bei jeder ausreichend grossen Verschiebung gegen die von der Feder (114) ausgeübte Spannung in die andere Extremlage gelangt und dort ebenfalls selbstättig arretiert wird.

3. Spritzdüse nach Anspruch 1, dadurch gekennzeichnet, dass im Kernstück (111) eine in der Austrittsöffnung (112) für den Einfachstrahl mündende Seele (113) ausgeformt ist.

4. Spritzdüse nach Anspruch 1, dadurch gekennzeichnet, dass das Kernstück (111) abgesehen von einigen Ausnehmungen (135) in dem an die Durchbrechung (110) angrenzenden Bereich des Düsenkopfs (107) in letzterem formschlüssig geführt wird, wobei die Austrittsöffnungen (122) für den Mehrfachstrahl einerseits durch die Ausnehmungen (135) und andererseits durch die Kontur des Kernstücks (111) gebildet werden.

5. Spritzdüse nach Anspruch 3 und 4, dadurch gekennzeichnet, dass die Rückwand des Düsenkopfs (107) ein ins Innere desselben ragendes, mit mindestens einer Nut (117) versehenes Zentrierstück (116) aufweist, welches einerseits als Führung für die Seele (113) des Kernstücks (111) dient und welches andererseits in der ersten extremalen Lage (Fig. 2 rechts) des Kernstücks (111) dessen Seele (113) gegen die Zufuhr von Flüssigkeit abdichtet, und dass das Kernstück (111) eine Schräge (120) aufweist, die in dessen zweiter extremalen Lage (Fig. 2 links) dichtend gegen die Unterkante der Begrenzung der Durchbrechung (110) des Düsenkopfs (107) anliegt.

6. Spritzdüse nach Anspruch 4, dadurch gekennzeichnet, dass der Kernstück (111) auf seiner Kontur Nasen (123) aufweist, die so ausgebildet sind, dass durch deren Bewegung innerhalb der Ausnehmungen (135) die Durchlassöffnungen (122) für den Mehrfachstrahl frei von Ablagerungen und Schmutz befreit werden.

7. Spritzdüse nach Anspruch 5, dadurch gekennzeichnet, dass das Zentrierstück (116) ein zylinderförmiges oberes Einde (118) aufweist, welches zur Entfernung von Verunreinigungen oder Kalkablagerungen beim Übergang von der zweiten in die erste Extremallage in die Auslassöffnung (112) für den Einfachstrahl eingreift und diese dabei von Ablagerungen oder Schmutz befreit werden.

8. Spritzdüse nach Anspruch 2, dadurch gekennzeichnet, dass die Verschiebung und die Arretierung des Kernstücks (111) mittels eines durch eine Herzkurvensteuerung geführten Vorsprungs (128) des Kernstücks (111) durchführbar ist.

9. Spritzdüse nach Anspruch 8, dadurch gekennzeichnet, dass die Feder (114) neben einer Druck- oder Zugspannung auch noch eine in eine andere Richtung weisende Spannung, beispielsweise eine Torsionsspannung auf das Kernstück (111) ausübt, die sicherstellt, dass das Kernstück (111) bei jedem neuerlichen Niederdrücken von der einen in die andere Extremallage gelangt.

## Revendications

1. Buse avec un tête (107), fixée sur le portebuse d'un hydropulseur, pouvant délivrer au choix un jet simple ou multiple pour l'hygiène bucco-dentaire, avec une pièce centrale (111) coulissant entre deux positions limites et ne dégageant dans sa première position limite que des orifices de sortie (122) pour un jet multiple et, dans sa seconde position limite, qu'un orifice de sortie (112) pour un jet simple, le trajet du liquide dans un corps (105) vers la tête de buse (107) n'étant pas modifié lors d'une transl'ation de la pièce centrale (111), ladite buse étant caractérisée en ce que la pièce centrale (111) est disposée dans une ouverture (110) de la tête (107), la sortie du jet simple est prévue à l'intérieur de la section du jet multiple, et en ce que dans la tête de buse (107) est prévu un dispositif d'encliquetage (114, 125, 128) au moyen duquel la pièce centrale (111) est déplaçable de l'une des positions limites dans l'autre.

2. Buse selon revendication 1, caractérisée en ce que la pièce centrale (111) est d'une par bloquée automatiquement dans une de ses deux positions limites par la contrainte mécanique qu'exerce un ressort (114) et passe d'autre part, lors de chaque translation suffisamment importante et contre la contrainte exercée par le ressort 114, dans la seconde position limite où elle est aussi bloquée automatiquement.

3. Buse selon revendication 1, caractérisée par une âme (113) formée dans la pièce centrale (111) et débouchant dans l'orifice de sortie (112) du jet simple.

4. Buse selon revendication 1, caractérisée en ce qu'à l'exception de quelques échancrures (135) de la zone de la tête (107) voisine de l'ouverture (110), la pièce centrale (111) est guidée dans ladite tête (107) par sûreté de forme, les orifices de sortie (122) du jet multiple étant formés par les échancrures (135) d'une part et le contour de la pièce centrale (111) d'autre part.

5. Buse selon revendications 3 et 4, caractérisée en ce que la paroi arrière de la tête (107) comporte une pièce de centrage (116) pénétrant dans ladite tête et présentant au moins une gorge (117) qui d'une part guide l'âme (113) de la pièce centrale (111) et d'autre part, dans la première position limite (partie droite de la figure 2) de la pièce centrale (111), assure l'étanchéité de l'âme (113) de cette dernière contre la pénétration de liquide; et la pièce centrale (111) présente un biseau (120) qui dans sa seconde position limite (partie gauche de la figure 2) s'applique avec étanchéité sur le bord inférieur de l'ouverture (110) de la tête de buse (107).

6. Buse selon la revendication 4, caractérisé en ce que la pièce centrale (111) comporte sur son contour des bossages (123) réalisés de façon que leur mouvement dans les encoches (135) élimine les dépôts et la saleté dans les orifices de sortie (122) du jet multiple.

7. Buse selon revendication 5, caractérisée en ce que la pièce de centrage (116) comprend une extrémité supérieure cylindrique (118) qui, pour éliminer les saletés ou les dépôts de calcaire, pénètre dans l'orifice de sortie (112) du jet simple lors du passage de la seconde dans la première position limite et le débarrasse ainsi des dépôts ou de la saleté.

8. Buse selon revendication 2, caractérisée en ce que la translation et le blocage de la pièce centrale (111) sont effectués par une saillie (128) de ladite pièce centrale guidée par une commande à cardioïde.

9. Buse selon la revendication 8, caractérisée en ce que le ressort (114) exerce, outre une contrainte de compression ou de traction, sur la pièce centrale (111) une contrainte orientée dans un autre direction, une contrainte de torstion par exemple qui assure le passage de la pièce centrale (111) d'une position limite dans l'autre à chaque nouvel enfoncement.

## Claims

1. A jet mounted on the handle member of an oral hygiene appliance, with a jet tip (107) from which optionally a single or multiple stream can be discharged for oral and dental hygiene, with a core piece (111) displaceable between the two extreme positions, said core piece exposing in its first extreme position only outlet openings (122) for a multiple stream while exposing in its second extreme position only one outlet opening (112) for a single stream, with the liquid path which extends through a shaft member (105) to the jet tip (107) remaining unchanged when the core piece (111) is displaced, characterized in that the core piece (111) is arranged in an aperture (110) of the jet tip (107), that the exit for the single stream is provided within the stream cross-sectional area of the multiple stream, and that the jet tip (107) accommodates a locking device (114, 125, 128) by means of which the core piece (111) is displaceable from the one to the other extreme position.

2. A jet as claimed in claim 1, characterized in that the core piece (111) is automatically locked in one of the two extreme positions by the mechanical tension exerted by a spring (114) and is moved into the other extreme position where it is likewise automatically locked on any sufficient amount of displacement in opposition to the tension exerted by the spring (114).

3. A jet as claimed in claim 1, characterized in that a core (113) terminating in the outlet opening (112) for the single stream is formed in the core piece (111).

4. A jet as claimed in claim 1, characterized in that the core piece (111), aside from a few recesses (135) in the area of the jet tip (107) adjoining the aperture (110), is positively guided in the latter, with the outlet opening (122) for the multiple stream being formed by the recesses (135) and by the contour of the core piece (111).

5. A jet as claimed in claim 3 and 4, characterized in that the rear wall of the jet tip (107) includes a centering piece (116) projecting into the interior thereof and provided with at least one groove (117), said centering piece serving as a guide means for the core (113) of the core piece (111) and, in the first extreme position (right-hand part of Fig. 2) of the core piece (111) sealing off its core (113) against the influx of liquid, and that the core pieces (111) includes a bevel (120) which, in the core piece second extreme position (left-hand part of Fig. 2), is in sealing engagement with the lower edge of the border of the aperture (110) of the jet tip (107).

6. A jet as claimed in claim 4, characterized in that the core piece (111) includes noses (123) along its contour which are so shaped that, as a result of their motion within the recesses (135), the outlet openings (122) for the multiple stream are freed of deposits and contamination.

7. A jet as claimed in claim 5, characterized in that the centering piece (116) includes a cylindrical upper end (118) which, for the purpose of removing contaminants or lime deposits, engages the outlet opening (112) for the single stream during its transition from the second to the first extreme position, thereby freeing said opening of deposits or contaminants.

8. A jet as claimed in claim 2, characterized in that the displacement and locking of the core piece (111) can be accomplished by means of a projection (128) of the core piece (111), said projection being guided by a cardioid control device.

9. A jet as claimed in claim 8, characterized in that the spring (114), in addition to its compressive or tensile force, also exerts a force in another direction, for example, a torsional force, on the core piece (111), said force ensuring that the core piece (111) is moved from the one extreme position to the other each time it is depressed.

FIG.1

7 (= 107)

5

6

1

4

3

2

FIG. 2

FIG. 3

FIG. 5

FIG. 4